# EUROPEAN PATENT APPLICATION

(11) **EP 2 950 562 A1**
(43) Date of publication of application: **02.12.2015**
(21) Application number: 14305787.5
(22) Date of filing: 27.05.2014
(51) Int. Cl.: H04W 4/04, H04M 1/725

(54) **Portable terminal**

(71) Applicant: Thomson Licensing, 92130 Issy-les-Moulineaux (FR)
(72) Inventor: Howson, Christopher, 35 576 Cesson Sévigné (FR); Bichot, Guillaume, 35 576 Cesson Sévigné (FR); Gautier, Eric, 35 576 Cesson Sévigné (FR)
(74) Representative: Browaeys, Jean-Philippe

(57) **Abstract**

Portable terminal (6) of a user, comprising:
- a user profile module (20) able to build and maintain a user profile (22) by collecting information relative to said user;
- a transmission module (34) able to transmit to a device at least a part of the user profile (22).

## Description

### FIELD OF THE INVENTION

The present invention generally relates to the field of connected devices.

More particularly, the invention deals with the personalization of the usage of consumer electronic appliances.

Thus, the invention concerns a portable terminal. It also concerns a corresponding device.

### BACKGROUND OF THE INVENTION

The approaches described in this section could be pursued, but are not necessarily approaches that have been previously conceived or pursued. Therefore, unless otherwise indicated herein, the approaches described in this section are not prior art to the claims in this application and are not admitted to be prior art by inclusion in this section.

Nowadays, within the contexts of "smart home", "smart car" and more generally "smart life", there is a trend to make connected objects which are operated and automated in a personalized way. The purpose is to facilitate the usage of consumer electronic appliances/devices.

In this context, "smart" appliances are built, that understand and/or learn how the user operates their interfaces in order to be able to automatically reproduce this operation. A well-known example of these appliances is a thermostat that programs itself with a personalized schedule after learning the user's habits.

This personalization of appliances is commonly done by building a user profile.

Hereafter by user profile, it is meant the user environment, such as for example the user's location, the weather, etc., and the user psychological and physiological features, such as for example the user's interests, the user's capacities, etc.

Dedicated solutions exist in order to build user profiles. However, these solutions are generally not interoperable.

Indeed, despite existing network protocols, such as UPnP (Universal Plug and Play), DLNA (Digital Living Network Alliance), Web Services, HTTP (HyperText Transfer Protocol), most of the deployed solutions and frameworks are silos working within one ecosystem only, whatever the appliance, for example a washing machine, a TV set, an oven, all having the same manufacturer and/or the same brand. Thus, the personalization is provided relying on said ecosystem only.

Today, any end-user device or application tries to personalize its service by logging the user interactivity and inferring the user habits and behavior. However, the usefulness of this personalization remains quite limited if the device or application can only rely on the user interaction with said device or application.

Indeed, from an ecosystem perspective, it is richer to capture user interaction across several devices or applications. This can be done if the user operates several applications and devices working within the same ecosystem only.

Thus, the user profile is limited and segmented. As it is built through different ecosystems, there is no interoperability, which results in a multiplicity of partial user profiles rather than a single full representation of the user.

Furthermore, the existing solutions for building user profiles generally either build the user profile in the end-user device or in the cloud. Both possibilities present drawbacks.

Indeed, although it is quite easy today to conceive a connected object, i.e. an object that can communicate across a network, it is much more complex to maintain and control remotely a complex software, such as for building a user profile, embedded in an end-user device. In this case, the end-user device has to gather such processing making the solution costly, less reliable and prone to interoperability issues.

Furthermore, inferring the knowledge about the person who operates the device is very difficult and limited. It is generally based on simple manipulations, like turning a knob. It is thus quite difficult to discriminate different people operating the device.

Also, maintaining the user profile and the usage log in the device is not optimal, as it necessitates connecting the appliance to an external operator, which presents a privacy risk, and/or requires user intervention for reading, modifying and saving the data from/to the appliance through a smartphone and/or a computer, for example.

That's why, most of the time, the user profile is centralized in the cloud. However, this solution presents a privacy issue, as the user cannot control information leaks. Furthermore, the user has little control over how this private information is used by cloud hosts that often exploit it for another purpose, for example in order to push unsolicited services, such as for example targeted advertising, etc.

### SUMMARY OF THE INVENTION

The present invention proposes a solution for improving the situation.

Accordingly, the present invention provides a portable terminal of a user, comprising:
- a user profile module able to build and maintain a user profile by collecting information relative to said user;
- a transmission module able to transmit to a device at least a part of the user profile.

The user profile here is advantageously a database gathering the set of collected information relative to the user.

Thus, according to the present invention, the user profile is built and centralized in a portable terminal of the user and can be accessed by any connected device requesting it. This solution means appliance manufacturers don't need to develop their own user profiling ways.

Furthermore, the solution of the invention allows a better user control on privacy, as the portable terminal is a private and personal device of the user.

Advantageously, the collected information comprises an activity and/or a behavior and/or a context of said user.

Examples of user activities may include watching TV, attending a dinner, etc.

Examples of user behaviors may include walking, talking, etc.

Examples of contexts may include time, location, weather, etc.

According to an embodiment, the collected information comprise information sensed by at least one sensor connected to said portable terminal.

The portable terminal itself may comprise embedded sensors which provide information relative to the user.

The collected information may also comprise information provided by the user himself.

Advantageously, the user profile module is able to update at least a part of the user profile on the basis of information transmitted from the device.

Thus, the user profile is enriched when the user operates the device.

According to an embodiment, the portable terminal is a smartphone.

Alternatively, the portable terminal is a wearable terminal.

Examples of wearable terminals include smart watches, smart glasses, activity trackers, smart textiles, etc.

Advantageously, the portable terminal comprises an authentication module able to authenticate the device.

Thus, non-authorized devices cannot have access to the user profile and the privacy of the user information is improved.

Advantageously, the portable terminal is able to be connected to a Body Area Network, BAN.

This connection enables the portable terminal to access to information captured from different sensors in the proximity of the user.

Advantageously, the portable terminal is able to be connected to a Local Area Network, LAN, and/or a Personal Area Network, PAN, to which the device is also connected.

Advantageously, the user profile module is able to build the user profile using some domain specific semantic knowledge.

As a lot of web services are structured according to a semantic language, the interoperability of the user profile is improved.

Advantageously, the portable terminal is able to make at least a part of the user profile not accessible by the device.

Preferably, the device has access only to the part of the user profile necessary for its operation.

The invention further provides a device able to be operated by a user, comprising a personalization module able to receive at least a part of the user profile from the portable terminal of the invention.

The device is preferably a digital appliance, for example a television set, a washing machine, a thermostat, a computer, etc.

Advantageously, the device is able to personalize its operation as a function of the received part of the user profile.

The personalization of the operation of the device may comprise an adaptation of a user interface of said device.

### BRIEF DESCRIPTION OF THE DRAWINGS

The present invention is illustrated by way of examples, and not by way of limitation, in the figures of the accompanying drawings, in which like reference numerals refer to similar elements and in which:
- Figure 1 represents an example of a system implementing an embodiment of the invention;
- Figure 2 represents a portable terminal according to an embodiment of the invention;
- Figure 3 represents a device according to an embodiment of the invention; and
- Figure 4 is a flowchart detailing the operation of an embodiment of the invention.

### DETAILED DESCRIPTION OF PREFERRED EMBODIMENTS

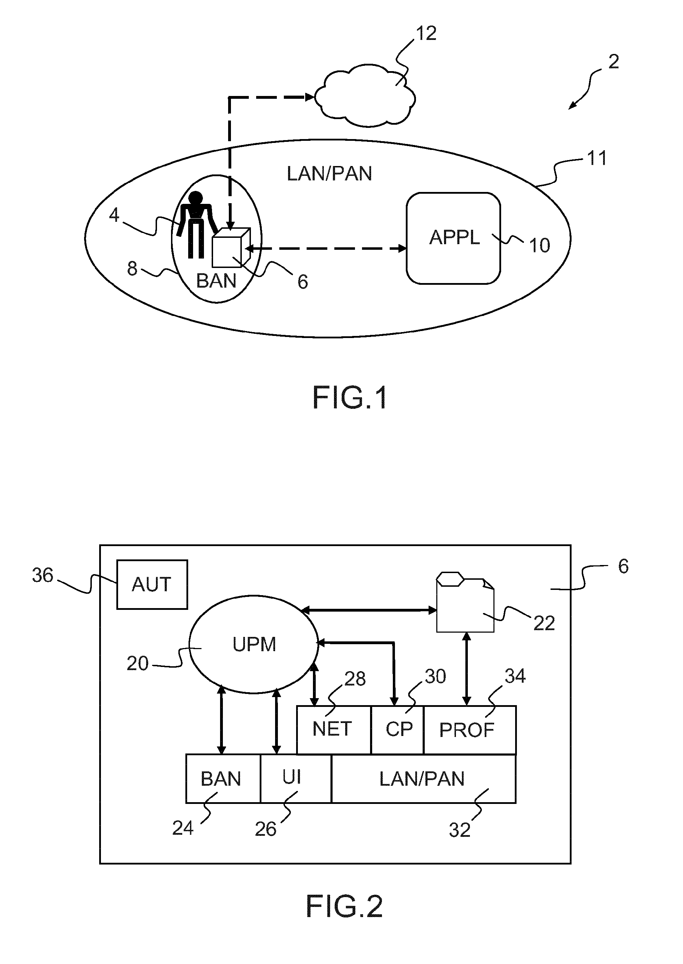

Referring to Figure 1, there is shown therein a system 2, corresponding for instance to a user's home scenario, implementing an embodiment of the invention.

Within the frame of this scenario, a user 4 is equipped with a portable terminal 6. The portable terminal 6 is for instance a smartphone or a wearable terminal like a smart watch, for example.

The portable terminal 6 is preferably controllable only by the user 4. It is a dedicated and personal terminal. Thus, the user 4, preferably after authentication, is able to configure and operate the portable terminal 6.

The portable terminal 6 is connected to wearable sensors through a Body Area Network, BAN 8. According to an embodiment, the portable terminal 6 comprises embedded sensors.

The portable terminal 6 is also connected to a device 10 which is preferably a digital appliance or an electronic equipment that needs to personalize its operation according to a user profile of the user manipulating it. The device 10 may be a TV set, a washing machine, a lamp, a thermostat, an oven, a personal computer, a tablet, etc.

According to an embodiment, the device 10 is the portable terminal 6 itself. According to this embodiment, at least one application within the portable terminal 6 is personalized in function of at least a part of the user profile.

According to the represented embodiment, the portable terminal 6 and the device 10 are connected through a Local Area Network, LAN, and/or through a Personal Area Network, PAN 11.

Furthermore, the portable terminal 6 is preferably connected to the Internet network 12 .

The structure of the portable terminal 6 is detailed in the following description with reference to Figure 2.

The portable terminal 6 comprises a user profile module 20 able to build and maintain a user profile 22 by collecting information relative to the user. The user profile 22 consists in a database gathering the set of collected information relative to the user.

The user profile module 20 is connected to the following modules of the portable terminal 6 which enable to gather the information relative to the user in order to build the user profile :
- A BAN interface 24 which connects the portable terminal 6 to different sensors within the BAN. These sensors can for example sense the user's body motion. These sensors may comprise embedded sensors within the portable terminal 6.
- A user interface 26, such as a tactile screen and/or a keyboard, which enables the user to input information relative to himself, such as his interests, his planned schedule, etc.
- An Internet access module 28, which is able to provide to the user profile module 20 information external to the system 2, such as for example the weather.
- A control protocol module 30 which enables to connect the user profile module 20 to a LAN/PAN interface 32. This control protocol is for instance UPnP or the Technicolor protocol QeO.

There are several possible candidate technologies for building and maintaining the user profile 22. One possible implementation is to use some domain of interest semantic knowledge. This has the particular advantage of attaching semantic meaning to all the information collected by the user profile module 20. It turns out that a lot of information accessible through Internet, for instance web services, are structured according to a semantic language such as RDF (Resource Description Framework) or OWL (Ontology Web Language). Therefore, the user profile 22 will be more interoperable. It can be, for example operated by a physician or a medical related machine.

According to an embodiment, the knowledge is structured using ontology engineering and more specifically the OWL formalism. It is enriched through static information, called data properties such as those linked with the user, as the name, address, etc, and dynamic information partly generated from the sensory events/data translated onto ontology object instances and property instances, and partly by a reasoner that cyclically, or on demand, infers new object instances and property instances parsing the set of existing object classes and properties and their corresponding instances according to the first order theory reasoning.

As an example, assuming that the user, called Paul, has a WiFi network at home, once the portable terminal 6, i.e. his smartphone, is connected to the WiFi home network 11, an internal event can be fired as "connected to Home WiFi" that can be translated by the event triage as the following relation: "mySmartphone isConnectedTo HomeWiFi" linking Paul's smartphone 6 with the local WiFi network 11. A new property instance can trigger new knowledge through the classification process performed by the reasoner as: "Paul isLocatedIn myHome".

The portable terminal 6 also comprises a transmission module 34 able to transmit to the device 10 at least a part of the user profile 22, through the LAN/PAN interface.

The transmission module 34 is also able to receive from the device 10 information relative to the manner of operating the device 10 by the user in order to enrich the user profile 22.

The portable terminal further comprises an authentication module 36 able to authenticate the device 10.

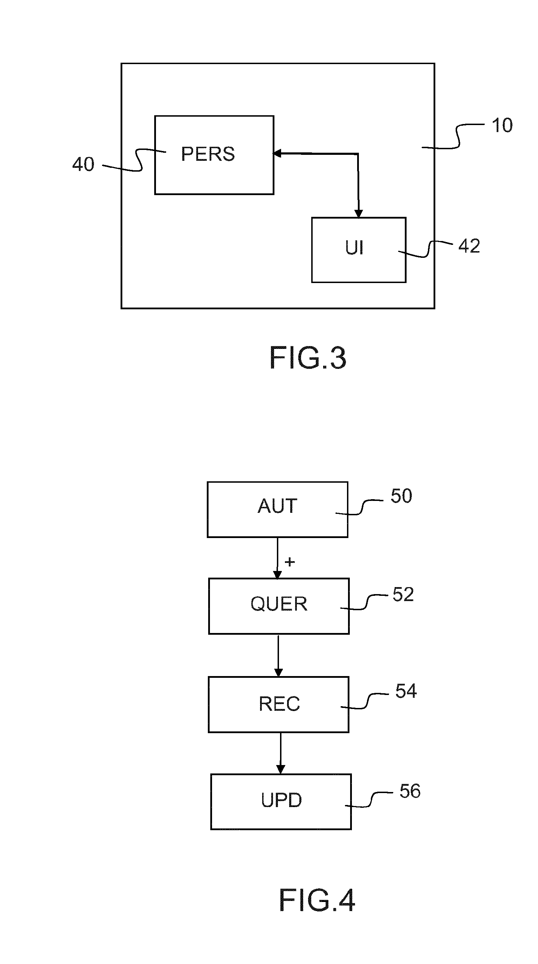

The structure of the device 10 is detailed in the following description with reference to Figure 3.

The device 10 comprises a personalization module 40 able to receive at least a part of the user profile from the portable terminal 6 in order to personalize the operation of the device 10.

This personalization of the operation of the device 10 advantageously comprises an adaptation of a user interface 42 of the device 10.

The flowchart of figure 4 details the operation of an embodiment of the invention.

Whenever the user 4 comes close to the device 10, the device 10 is informed about the presence of the portable terminal 6 and/or the portable terminal 6 is informed about the presence of the device 10.

At step 50, the authentication module 36 authenticates the device 10.

After the device 10 is authenticated, the personalization module 40 queries, at step 52, at least a part of the user profile 22, in order to discover, for example, new user habits and to refresh its previously stored user profile.

Then, the personalization module 40 receives, at step 54, from the transmission module 34, through the LAN/PAN interface 11, the requested part of the user profile 22 and uses it to personalize its operation, for instance its user interface 42.

Examples of operation personalization of different appliances in the home may include:
- a TV set which receives the part of the user profile related to the user's TV program wishes then automatically powers on and switches to the right channel at the right time;
- a washing machine which indicates, after having received the part of the user profile related to the user's day schedule, the best time for launching a new cycle, and selects the preferred program automatically;
- the lamps and/or the thermostat which automatically turn on/off according to the user's schedule and the weather;
- the oven which alerts the user wherever he is when the dish is ready, after having received information about the user location at that time.

At step 56, for instance when the user 4 has finished using the device 10, the device 10 transmits to the portable terminal 6 information about the operation(s) performed on the device 10 in order for the user profile module 20 to update the user profile 22.

This transmission may be achieved by publishing network messages using a smart home protocol, like Technicolor QeO.

In the following description, some examples of use of embodiments of the invention are provided.

According to a first example, a user Bill comes back from the office, he enters in his home and switches on the TV. The latter gets connected with Bill's user profile module, through a connection between the TV and Bill's smartphone established over Bluetooth, for example.

Bill operates the TV, switching to his favorite channel. Bill's user profile is then updated by the TV set. In this case, the TV itself does not log anything.

After a while, the user profile module learns how to automatically operate the TV set. The latter, next time it gets connected to Bill's user profile module, will perform automatically the following operations for Bill thanks to his user profile:
- Switch on at the right time;
- Switch to the right channel at the right moment;
- Record automatically some program;
- Display important information for Bill.

According to a second example, Bill goes to the kitchen, pours a cup of milk and warms it up using the microwave oven. In the mean time, the latter gets connected to Bill's user profile module and discovers that Bill is used to warm up his milk every week days at the same time with the same temperature. The microwave oven displays the inferred usage on the front display. Bill puts his cup in the oven, closes the door, sees quickly that the oven understood his wish and finally pushes the start button.

According to a third example, Bill is travelling and is in a hotel for the night. The hotel's TV set gets a restricted access to Bill's user profile. This is sufficient for the TV set to switch to Bill's preferred channel.

According to a fourth example, Bill opens his PC in order to do some remote work. The PC gets Bill's user profile and automatically connects to Bill's office VPN (Virtual Private Network). Then, Bill switches on the music system. The latter gets Bill's profile automatically and tunes it to his favorite channel.

While there has been illustrated and described what are presently considered to be the preferred embodiments of the present invention, it will be understood by those skilled in the art that various other modifications may be made, and equivalents may be substituted, without departing from the true scope of the present invention. Additionally, many modifications may be made to adapt a particular situation to the teachings of the present invention without departing from the central inventive concept described herein. Furthermore, an embodiment of the present invention may not include all of the features described above. Therefore, it is intended that the present invention not be limited to the particular embodiments disclosed, but that the invention includes all embodiments falling within the scope of the appended claims.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed as a reference to the plural and vice versa.

A person skilled in the art will readily appreciate that various parameters disclosed in the description may be modified and that various embodiments disclosed and/or claimed may be combined without departing from the scope of the invention.

## Claims

1. Portable terminal (6) of a user (4), comprising:
- a user profile module (20) able to build and maintain a user profile (22) by collecting information relative to said user (4);
- a transmission module (34) able to transmit to a device (10) at least a part of the user profile (22).

2. Portable terminal of claim 1, wherein the collected information comprises an activity and/or a behavior and/or a context of said user (4).

3. Portable terminal of claim 1 or 2, wherein the collected information comprise information sensed by at least one sensor connected to said portable terminal (6).

4. Portable terminal of any of claims 1 to 3, wherein the collected information comprise information provided by the user (4).

5. Portable terminal of any of claims 1 to 4, wherein the user profile module (20) is able to update at least a part of the user profile (22) on the basis of information transmitted from the device (10).

6. Portable terminal of any of claims 1 to 5, wherein said portable terminal (6) is a smartphone.

7. Portable terminal of any of claims 1 to 6, wherein said portable terminal is a wearable terminal.

8. Portable terminal of any of claims 1 to 7, wherein said portable terminal (6) comprises an authentication module (36) able to authenticate the device (10).

9. Portable terminal of any of claims 1 to 8, wherein said portable terminal (6) is able to be connected to a Body Area Network, BAN (8).

10. Portable terminal of any of claims 1 to 9, wherein said portable terminal (6) is able to be connected to a Local Area Network, LAN, and/or a Personal Area Network, PAN, to which the device (10) is also connected.

11. Portable terminal of any of claims 1 to 10, wherein the user profile module (20) is able to build the user profile (22) using some domain specific semantic knowledge.

12. Portable terminal of any of claims 1 to 11, wherein the portable terminal (6) is able to make at least a part of the user profile (22) not accessible by the device (10).

13. Device (10) able to be operated by a user (4), comprising a personalization module (40) able to receive at least a part of the user profile (22) from the portable terminal (6) of any of claims 1 to 12.

14. Device of claim 13, wherein said device (10) is able to personalize its operation as a function of the received part of the user profile (22).

15. Device of claim 14, wherein the personalization of the operation of the device (10) comprises an adaptation of a user interface (42) of said device (10).
